## Europäisches Patentamt

## European Patent Office

## Office européen des brevets

(11) Veröffentlichungsnummer: **0 026 823**
**A1**

# (12) EUROPÄISCHE PATENTANMELDUNG

(21) Anmeldenummer: **80104684.8**

(22) Anmeldetag: **08.08.80**

(51) Int. Cl.³: **F 16 J 15/34**

(30) Priorität: **09.10.79 DE 2940845**

(43) Veröffentlichungstag der Anmeldung: **15.04.81**
**Patentblatt 81/15**

(84) Benannte Vertragsstaaten: **BE DE FR GB SE**

�]① Anmelder: **Ford-Werke Aktiengesellschaft, Ottoplatz 2, D-5000 Köln 21 (DE)**

(84) Benannte Vertragsstaaten: **BE DE SE**

(71) Anmelder: **FORD MOTOR COMPANY LIMITED, Eagle Way, Brentwood Essex CM13 3BW (GB)**

(84) Benannte Vertragsstaaten: **GB**

(71) Anmelder: **Ford France S.A., 344 Avenue Napoleon Bonaparte B.P. 307, F-92506 Rueil Malmaison Cedex (FR)**

(84) Benannte Vertragsstaaten: **FR**

(72) Erfinder: **Stojek, Dieter, Dr., In der Krabb 7, D-5060 Bergisch-Gladbach (DE)**

(74) Vertreter: **Höhn, Bernhard, Dipl.-Ing., Ford-Werke Aktiengesellschaft Patentabteilung Z/DRR-2 Ottoplatz 2, D-5000 Köln 21 (DE)**

(54) Kreiselpumpendichtung, insbesondere für Kühlwasserpumpen in Kraftfahrzeugen.

㉗ 1. Kreiselpumpendichtung, insbesondere für Kühlwasserpumpen in Kraftfahrzeugen, mit einem auf der Pumpenwelle fest angeordneten Gegenlaufring und einer im Pumpengehäuse eingepreßten Gleitringdichtungsanordnung, die aus einer Hülse, einem Dichtungsbalg, einer Schraubenfeder und einem Gleitring besteht, der über die Feder in gleitender Anlage an den Gegenlaufring gedrückt wird, dadurch gekennzeichnet, daß der Gleitring (11) radial außerhalb seiner ebenen Gleitdichtfläche (13) mit einem Filterring (12) aus wasserfestem, jedoch porösem, wasserdurchlässigem Material versehen ist, der elastisch am Gegenlaufring (5) anliegt.

2. Kreiselpumpendichtung nach Anspruch 1, dadurch gekennzeichnet, daß der Filterring (12) aus Filz besteht.

3. Kreiselpumpendichtung nach Anspruch 1, dadurch gekennzeichnet, daß der Filterring (12) aus porösem Kunststoff besteht.

4. Kreiselpumpendichtung nach Anspruch 1, dadurch gekennzeichnet, daß der Filterring (12) aus poröser Keramik besteht.

5. Kreiselpumpendichtung nach den Ansprüchen 1 bis 4, dadurch gekennzeichnet, daß mehrere Filterringe (12) aus unterschiedlichen porösen Materialien radial aufeinanderfolgend angeordnet sind.

**Ford-Werke Aktiengesellschaft**
Verwaltung

Postanschrift:      Ford-Werke AG · Postfach 21 03 69 · 5000 Köln 21

Ottoplatz 2
Köln-Deutz
☎ (02 21) 8 25-1
Telex : 8 88 483
Telegramme : fordwerke koeln

Ihre Zeichen      Ihre Nachricht      Telefon      Unsere Zeichen

(0221) 825- 5585      Z/DRR-21 Sp pt

Betreff

## Patentanmeldung

## Kreiselpumpendichtung, insbesondere für Kühlwasserpumpen in Kraftfahrzeugen

Die Erfindung bezieht sich auf eine Kreiselpumpendichtung, insbesondere für Kühlwasserpumpen in Kraftfahrzeugen, mit einem auf der Pumpenwelle fest angeordneten Gegenlaufring und einer im Pumpengehäuse eingepreßten Gleitringdichtungsanordnung, die aus einer Hülse, einem Dichtungsbalg, einer Schraubenfeder und einem Gleitring besteht, der über die Feder in gleitender Anlage an den Gegenlaufring gedrückt wird.

Kreiselpumpendichtungen der eingangs genannten Art sind bereits in einer Vielzahl von Ausführungsformen bekannt.

Aus der DE-OS 28 50 394 ist z. B. in Fig. 1 eine Kreiselpumpendichtung bekannt, bei der der Gegenlaufring und die Gleitringdichtungsanordnung zur Erleichterung der Montage zu einer Baueinheit zusammengefaßt sind.

Sitz der Gesellschaft: Köln · Registergericht Köln, HRB 84 · Vorsitzender des Aufsichtsrates: Robert A. Lutz
Vorstand: Peter Weiher, Vorsitzender · Hermann Dederichs · Waldemar Ebers · Hans Wilhelm Gäb · Paul A. Guckel · Wilhelm Inden
Alfred Langer · Hans-Joachim Lehmann · Dieter Ullsperger

0026823

- 2 -

Diese weitverbreitete Form einer Kreiselpumpendichtung, insbesondere für Kühlwasserpumpen in Kraftfahrzeugen weist jedoch wie in der genannten DE-OS 28 50 394 weiter erläutert wird den Nachteil auf, daß zwischen die ebenen Gleitdichtflächen am Gegenlaufring und am Gleitring Sandkörner und dergleichen gelangen und dort schmirgelnden Verschleiß verursachen. Solche Sandkörnchen treten im Kühlsystem von Verbrennungsmotoren als Rückstände der beim Gießen der Bauteile des Verbrennungsmotors erforderlichen Gießkerne auf.

Gemäß der genannten DE-OS 28 50 394 wird zur Vermeidung dieses Nachteiles vorgeschlagen, anstelle der bisher üblichen Kreiselpumpendichtung eine neue nach Art eines Radial-Wellendichtringes ausgebildete Dichtringanordnung zu verwenden, bei der der eigentlichen Dichtlippe eine oder mehrere Hilfsdichtlippen axial einwärts von der eigentlichen Dichtlippe angeordnet werden, die die Aufgabe haben, in der Flüssigkeit vorhandene abrasive Partikel wie zum Beispiel Sandkörnchen von der eigentlichen Dichtlippe fernzuhalten.

Diese vorgeschlagene Lösung weist jedoch den Nachteil auf, daß die sich an den Hilfsdichtlippen absetzenden abrasiven Partikel nach und nach zu einem Verschleiß der Hilfsdichtlippen führen und somit früher oder später wieder abrasive Partikel zur eigentlichen Dichtlippe gelangen und diese zerstören können. Außerdem lässt die Hilfsdichtlippe auch keine Flüssigkeit durch, so daß die eigentliche Dichtlippe Verschleiß durch Trockenlauf erleiden kann.

Aus der DE-OS 26 23 583 ist z. B. eine Kreiselpumpendichtung der eingangs genannten Art bekannt, bei der gleichfalls der Gegenlaufring und die Gleitringdichtungsanordnung zur Erleichterung der Montage zu einer Baueinheit zusammengefaßt sind.

Das Dichtungsgehäuse dieser Baueinheit umfaßt hierbei auch den Gegenlaufring in einer Art und Weise, daß in der Flüssigkeit vorhandene abrasive Partikel wie z. B. Sandkörnchen nur durch Passieren mehrerer

- 3 -

enger Ringspalte zur ebenen Gleitdichtfläche zwischen dem Gegenlaufring und dem Gleitring gelangen können.

Obwohl diese Anordnung den Zutritt von groben abrasiven Partikel
weitgehend verhindert, können entsprechend kleine Partikel nach und
nach die engen Ringspalte überwinden und doch zu den ebenen Gleitdichtflächen gelangen und hier Verschleiß verursachen.

Die Aufgabe der Erfindung ist es, eine Kreiselpumpendichtung der
eingangs genannten Art derart zu verbessern, daß die erwähnten Nachteile bekannter Dichtungsanordnungen vermieden werden.

Gemäß der Erfindung wird diese Aufgabe gelöst, indem eine Kreiselpumpendichtung der eingangs genannten Art die im Kennzeichen
des Patentanspruchs 1 aufgezeigten Merkmale aufweist. In den Patentansprüchen 2 bis 5 sind zweckmässige Ausführungsformen erläutert.
Dadurch, daß der Gleitring radial außerhalb seiner ebenen Gleitdichtfläche mit einem Filterring aus wasserfestem, jedoch wasserdurchlässigem Material versehen ist, der elastisch am Gegenlaufring anliegt, wird folgender wesentlicher Effekt erzielt. Da der einen verhältnismäßig großen Querschnitt aufweisende Filterring wasserdurchlässig ist, baut sich keine Druckdifferenz an der Hilfsdichtfläche auf,
so daß das Eindringen von Flüssigkeit und Partikeln in die Hilfsdichtfläche minimiert wird und die Leckmenge, die zum Schmieren der
Gleitdichtfläche erwünscht ist, richt über den Anlegespalt am Gegenlaufring strömt, sondern über den gesamten Querschnitt des Filterringes, wodurch in der Flüssigkeit enthaltene abrasive Partikel an
anderer Stelle als am Anlagespelt am Gegenlaufring in das poröse
Material des Filterringes gelangen und hier festgehalten werden.
Damit ist jedoch sichergestellt, daß eine Vielzahl von abrasiven Partikeln nicht mehr in den Bereich des Anlagespaltes zum Gegenlaufring
gelangen kann, da sie im Filterring festgehalten werden. Daraus ergibt sich, daß der Filterring im Bereich des Anlagespaltes zum Gegenlaufring weniger verschleißt als die bisher bekannten Hilfsdichtlippen,
da hier im Gegensatz zu den Hilfsdichtlippen, wo zunächst abgehaltene
Partikel zu einem späteren Zeitpunkt wieder in den Anlagespalt gelangen können, die einmal im Filterring festgehaltenen Partikel aus
dem Kreislauf ausscheiden.

Die Erfindung wird anhand eines in der beiliegenden Zeichnung gezeigten Ausführungsbeispieles näher erläutert. Es zeigt:

Fig. 1          einen vertikalen Schnitt durch eine herkömmliche Dichtungsanordnung an einer
                Kühlwasserpumpe eines Kraftfahrzeuges;

Fig. 2          einen vergrößerten Schnitt durch den Gegenlaufring und den Gleitring mit dem Filterring gem. der Erfindung.

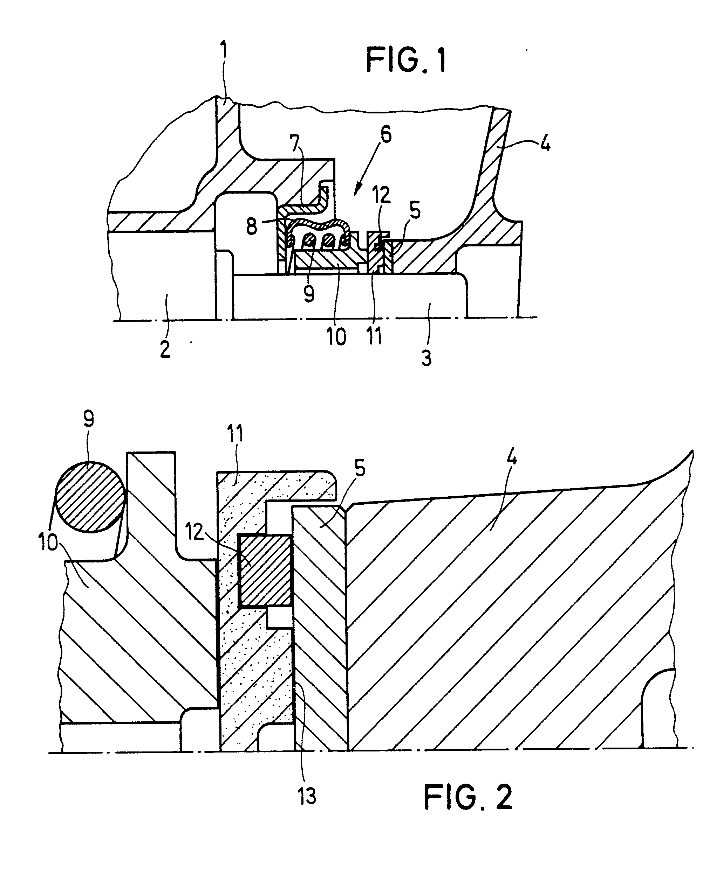

Die in Fig. 1 gezeigte Kühlwasserpumpe eines Kraftfahrzeuges besteht
im wesentlichen aus einem Pumpengehäuse 1, in dem über eine
Wellenlagerung 2 eine Pumpenwelle 3 drehbar gelagert ist. Am inneren Ende der Pumpenwelle 3 ist ein Pumpenlaufrad 4 fest angeordnet,
an dessen nach außen zeigender Nabe ein Gegenlaufring 5 fest angeordnet ist. Eine Gleitringdichtungsanordnung 6, die aus einer Hülse 7,
einem Dichtungsbalg 8, einer Schraubenfeder 9, einem Stützring 10
und einem Gleitring 11 besteht, ist in einer Bohrung des Pumpengehäuses 1 eingepreßt.

Soweit bisher beschrieben, ist die Dichtungsanordnung der Kühlwasserpumpe von herkömmlicher Bauart.

Wie aus Fig. 2 zu ersehen ist, ist der Gleitring 11 radial außerhalb
seiner ebenen Gleitdichtfläche 13 mit einem Filterring 12 aus wasserfestem, jedoch porösem, wasserdurchlässigem Material versehen,

- 5 -

der elastisch am Gegenlaufring 5 anliegt.

Der Filterring 12 kann hierbei aus verschiedenen geeigneten Materialien wie z. B. aus Filz, aus porösem Kunststoff oder aus poröser Keramik bestehen.

Dadurch, daß an den Filterring 12 gelangende abrasive Partikel, wie Sandkörnchen und dergleichen, im verhältnismäßig großem Filterquerschnitt des Filterringes 12 aufgefangen und festgehalten werden, kann nur ein viel geringerer Teil von abrasiven Partikeln in den Anlagespalt zum Gegenlaufring gelangen und kann hier dementsprechend auch nur geringeren Verschleiß verursachen. Die Porösität des Filterringes 12 ermöglicht neben dem Abfangen von abrasiven Partikeln auch eine gewünschte Schmierung der ebenen Gleitdichtfläche 13.

Die in der Figur gezeigte Ausführungsform stellt selbstverständlich nur eine mögliche Bauform dar, es sind je nach Anwendungsfall auch mehrere radial hintereinander geschaltete Filterringe gegebenenfalls mit unterschiedlich feiner Porösität denkbar.

BAD ORIGINAL

## FIG. 1

## FIG. 2

Europäisches
Patentamt

**EUROPÄISCHER RECHERCHENBERICHT**

0026823

Nummer der Anmeldung

EP 80 10 4684

| **EINSCHLÄGIGE DOKUMENTE** | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | FR - A - 1 259 274 (THE MORGAN)  * Zusammenfassung; Figuren 1-4 *  -- | 1-4 | F 16 J 15/34 |
|  | FR - A - 1 435 931 (AMIRAULT)  * Zusammenfassung; Figuren *  -- | 1,4 | |
|  | FR - A - 1 237 697 (SCOBEL)  * Zusammenfassung; Figuren 1,2 *  & DE - C - 1 248 398  ---- | 1,4 | RECHERCHIERTE SACHGEBIETE (Int. Cl.³)  F 16 J 15/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-01-1981 | LEGER |

EPA form 1503.1  06.78